# EUROPEAN PATENT APPLICATION

(11) **EP 4 496 187 A1**
(43) Date of publication of application: **22.01.2025**
(21) Application number: 24189731.3
(22) Date of filing: 19.07.2024
(51) Int. Cl.: H02K 1/276, H02K 15/03

(54) **SYSTEMS AND METHODS FOR PROVIDING A BALANCED SUPPLY OF MAGNETIC-POLYMER MELTS IN PERMANENT MAGNET ROTORS**

(30) Priority: 20.07.2023 US 202318355974
(71) Applicant: ABB SCHWEIZ AG, 5400 Baden (CH)
(72) Inventor: ZHONG, Sheng, 5400 Baden (CH); TREMELLING, Darren Dale, 5400 Baden (CH); PERIGO, Elio Alberto, 5400 Baden (CH); HOFFMAN, Matthew Dodge, 5400 Baden (CH)
(74) Representative: Zimmermann & Partner Patentanwälte mbB

(57) **Abstract**

A rotor core mold assembly including a rotor stack and a distribution plate. The rotor stack has a top surface and at least one rotor pole defined by a plurality of rotor stack cavities. Each of the plurality of rotor stack cavities has an aspect ratio defined by a width of a respective rotor stack cavity and a longitudinal length of the rotor stack. The distribution plate has a top surface and a bottom surface removably locatable on the top surface of the rotor stack to thereby form a fluid seal. The distribution plate includes a flow channel positioned on the top surface of the distribution plate and extending through the distribution plate, an injection gate in fluid communication with the flow channel, and a plurality of secondary flow channels coupled between the injection gate and the bottom surface of the distribution plate in fluid communication with the injection gate.

## Description

### BACKGROUND

The field of the disclosure relates generally to rotor stacks and rotor stack molds for polymer-filled permanent magnet motors, and more particularly, to systems and methods for providing a balanced supply of magnetic-polymer melts to the rotor stack cavities of a rotor stack positioned within the mold through injection filling patterns associated with the rotor stack cavities.

Permanent magnet (PM) synchronous reluctance machines (PMSynRM) might implement polymer bonded magnets (PBMs) in their construction. In this manufacturing platform, the filling of PBMs in the rotor cavities is completed using a suitable molding process, such as an injection molding or transfer molding system. A filling pattern is used to serve as a means for flowing a material, such as a polymer material, into the rotor cavities. Additionally, in order to improve the quality of the molded rotors, it is important to balance the filling of the rotor cavities so that the filling of each of the rotor cavities is completed at the same, or substantially the same, time. During production of a PMSynRM rotor, a laminated rotor with cavities is placed in a mold cavity. PBM is then injected into the cavities through a runner/gate system (which can be with or without heating).

There are multiple factors that may affect the molding process and thus the final resultant rotors. The PMSynRM rotor generally has multiple cavities to be filled with PBMs via a selected molding process. When the filling process is not balanced, one rotor cavity may be completely filled and packed ahead of other rotor cavities. As a result of an unbalanced filling operation, different defects may be observed during rotor manufacturing. For example, one section of cavities may be filled while other cavities are not filled or, in some cases, not fully packed. These defects can cause undesirable rotor deformation beyond manufacturing tolerances, resulting in high scrap rates.

Therefore, there is a need to improve the methods and systems used to produce molded rotors and, more specifically, methods and systems used to yield balanced filling of rotor cavities and achieve uniform mass distribution in the molded rotors, resulting in machine rotors with proper processing and performance.

### BRIEF DESCRIPTION

In one aspect of the present disclosure, a rotor core mold assembly including a rotor stack and a distribution plate is disclosed. The rotor stack has a top surface and at least one rotor pole, the at least one rotor pole defined by a plurality of rotor stack cavities extending from the top surface through the rotor stack. Each of the plurality of rotor stack cavities have an aspect ratio defined by a width of a respective rotor stack cavity and a longitudinal length of the rotor stack. The distribution plate has a top surface and a bottom surface, the bottom surface removably locatable on the top surface of the rotor stack to thereby form a fluid seal. The distribution plate includes a flow channel positioned on the top surface of the distribution plate and extending through the distribution plate, an injection gate positioned proximate the bottom surface of the distribution plate in fluid communication with the flow channel, and a plurality of secondary flow channels coupled between the injection gate and the bottom surface of the distribution plate in fluid communication with the injection gate. Each of the plurality of secondary flow channels are in fluid communication with at least one of the plurality of rotor stack cavities, each of the plurality of secondary flow channels having a channel cross-sectional area.

In another aspect of the present disclosure, a rotor core positionable in a rotor core mold is disclosed. The rotor core includes a rotor stack having a top surface and a bottom surface defining a longitudinal length of the rotor stack and at least one rotor pole defined by a plurality of rotor stack cavities extending from the top surface through the rotor stack to the bottom surface. Each of the plurality of rotor stack cavities has an aspect ratio defined by a width of a respective rotor stack cavity and the longitudinal length of the rotor stack, wherein the aspect ratio of each of the plurality of rotor stack cavities is balanced such that the plurality of rotor stack cavities are filled by a material at a substantially equal rate.

### BRIEF DESCRIPTION OF THE DRAWINGS

The subject-matter of the disclosure will be explained in more detail in the following text with reference to exemplary embodiments which are illustrated in the attached drawings.
FIG. 1 illustrates a perspective view of an exemplary rotor stack in accordance with an embodiment of the present disclosure;
FIG. 2 illustrates a top view of the rotor stack of FIG. 1;
FIGS. 3A and 3B illustrate plan views of rotor pole cavity geometries in accordance with embodiments of the present disclosure;
FIG. 4 illustrates a top view of a rotor core mold assembly in accordance with an embodiment of the present disclosure;
FIG. 5 illustrates a perspective view of a distribution plate positioned on a first surface of the rotor stack in accordance with an embodiment of the present disclosure;
FIG. 6 illustrates a bottom view of the distribution plate of FIG. 5;
FIG. 7 illustrates a cross-sectional perspective view of the distribution plate along line 7-7' as shown in FIG. 5;
FIG. 8 illustrates a longitudinal cross-sectional view of the rotor core mold assembly along line 8-8' as shown in FIG. 4; and,
FIGS. 9A and 9B illustrate plan views of flow channel configurations of the distribution plate in accordance with embodiments of the present disclosure.

The reference symbols used in the drawings, and their meanings, are listed in summary form in the list of reference symbols. In principle, identical parts are provided with the same reference symbols in the figures.

### DETAILED DESCRIPTION

In the following specification and the claims, reference will be made to a number of terms, which shall be defined to have the following meanings.

As used herein, the singular forms "a," "an," and "the" include plural references unless the context clearly dictates otherwise. The terms "comprising," "including," and "having" are intended to be inclusive and mean that there may be additional elements other than the listed elements. The terms "optional" or "optionally" means that the subsequently described event or circumstance may or may not occur, and that the description includes instances where the event occurs and instances where it does not.

Unless otherwise indicated, approximating language, such as "generally," "substantially," and "about," as used herein indicates that the term so modified may apply to only an approximate degree, as would be recognized by one of ordinary skill in the art, rather than to an absolute or perfect degree. Accordingly, a value modified by a term or terms, such as "about," "approximately," and "substantially," is not to be limited to the precise value specified. In at least some instances, the approximating language may correspond to the precision of an instrument for measuring the value. Here and throughout the specification and claims, range limitations may be identified. Such ranges may be combined and/or interchanged, and include all the sub-ranges contained therein unless context or language indicates otherwise.

Additionally, unless otherwise indicated, the terms "first," "second," etc. are used herein merely as labels, and are not intended to impose ordinal, positional, or hierarchical requirements on the items to which these terms refer. Moreover, reference to, for example, a "second" item does not require or preclude the existence of, for example, a "first" or lower-numbered item or a "third" or higher-numbered item.

In summary, embodiments of the disclosure are directed to a rotor core mold assembly and an associated rotor core and distribution plate for balancing injection filling patterns of cavities of the rotor core. The rotor core includes at least one rotor stack having a rotor top surface and at least one rotor pole. The at least one rotor pole includes a plurality of rotor stack cavities extending longitudinally through the rotor stack. The distribution plate has a top plate surface and a bottom plate surface. The bottom plate surface is removably locatable on the rotor top surface. When located on the rotor top surface, the distribution plate and rotor stack form a seal between the distribution plate and the rotor stack.

The distribution plate further includes a flow channel positioned on the top plate surface and an injection gate positioned along the bottom plate surface. The injection gate is in fluid communication with the flow channel. A plurality of flow channels are in fluid communication with the injection gate, and each flow channel is in fluid communication with at least one of the plurality of rotor stack cavities. Each flow channel has an associated cross-sectional area. Additionally, each of the rotor stack cavities has an associated aspect ratio defined by a width of a respective rotor stack cavity and a longitudinal length of the rotor stack.

The rotor stack is positioned within a cavity of the rotor core mold assembly and the distribution plate is positioned on the rotor stack such that flow channels of the distribution plate are in fluid communication with the rotor cavities to define channels to supply melted/molten material through the distribution plate and into the rotor cavities to thereby fill the rotor stack cavities. Molten composite material is injected through flow channels of the distribution plate to fill the rotor stack cavities with the composite material. In some embodiments, the material is magnetic. In some embodiments, the material is magnetizable.

Geometric configurations of the rotor stack cavities and configurations of the flow channels of the distribution plate are designed and optimized to substantially equalize the injection filling pattern of the rotor stack such that the rotor stack cavities are filled by a material injected through the flow channel at a substantially equal fill rate. As used herein, the term "substantially equal fill rate" denotes that filling of the plurality of rotor stack cavities is completed concurrently at substantially the same time during rotor manufacturing.

For purposes of the present disclosure, the injection filling pattern of a rotor stack is a function of the axial length of the rotor stack, the cross-sectional area of the plurality of rotor stack cavities, and the magnitude of the volume of fluid flowing from the flow channels and into the rotor cavities. The magnitude of fluid flowing from the flow channels is a function of system pressure, the cross-sectional areas of the flow channels and the number of flow channels in fluid communication with any given rotor stack cavity. Where multiple flow channels are in fluid communication with a rotor stack cavity, the magnitude of fluid flowing from the multiple flow channels is calculated from a sum of the cross-sectional areas of the multiple flow channels. These parameters are hereinafter referred to as "primary factors." It is understood that other secondary factors may also affect the injection filling pattern of rotor stack cavities. Such secondary factors may include, but are not limited to, rotor stack cavity wall surface finishes, temperature and composition of the composite material, injection pressure, and more generally, fluid mechanics and mass transfer characteristics of the injection system.

As used herein, the term "equalizing" when referring to injection filling patterns of the rotor stack, and fill rates of the plurality of rotor stack cavities refers to controlling the primary factors so that the plurality of rotor stack cavities are filled in substantially the same time under ideal conditions. It is understood that in practice, the injection filling pattern may not be equal due to the secondary factors. Ideal conditions are calculated and optimized by computer-aided simulations and finite element analysis. Real conditions (not-ideal conditions) are observed and determined through prototyping and pilot testing.

To achieve substantially equalized fill rates for the rotor cavities, the magnitude of fluid flowing from the one or more flow channels is configured to be proportional to the cross-sectional area of a rotor stack cavity. Additionally, an aspect ratio of the rotor stack cavity in fluid communication with the one or more flow channels also determines the fluid flow from the flow channels. The aspect ratio of a rotor stack cavity is defined as a width of a respective rotor stack cavity divided by the longitudinal length of the rotor stack. In general, the larger the aspect ratio of a cavity, the easier the flow injection in the cavity. Therefore, the number of flow channels, the diameters of the flow channels, and the cross-sectional area of the at least one rotor stack cavity are sized and configured to achieve substantially equalized fill rates for the rotor cavities. The longitudinal length of the rotor stack may also be configured to achieve substantially equalized fill rates by using a shorter rotor stack. Where the longitudinal length of the rotor stack is decreased, multiple rotor stacks may be combined together to form the rotor core.

In view of the above, the following embodiments 1 to 20 may be provided:
1. A rotor core mold assembly comprising: a rotor stack having a top surface and at least one rotor pole, the at least one rotor pole defined by a plurality of rotor stack cavities extending from the top surface through the rotor stack, each of the plurality of rotor stack cavities having an aspect ratio defined by a width of a respective rotor stack cavity and a longitudinal length of the rotor stack; and, a distribution plate having a top surface and a bottom surface, the bottom surface removably locatable on the top surface of the rotor stack to thereby form a fluid seal, the distribution plate further comprising: a flow channel positioned on the top surface of the distribution plate and extending through the distribution plate; an injection gate positioned proximate the bottom surface of the distribution plate in fluid communication with the flow channel; and, a plurality of secondary flow channels coupled between the injection gate and the bottom surface of the distribution plate in fluid communication with the injection gate, each of the plurality of secondary flow channels being in fluid communication with at least one of the plurality of rotor stack cavities, each of the plurality of secondary flow channels having a channel cross-sectional area.
2. The rotor core mold assembly of embodiment 1, wherein the channel cross-sectional area of each of the plurality of secondary flow channels is proportional to the aspect ratio of the respective rotor stack cavity with which the respective secondary flow channel is in fluid communication.
3. The rotor core mold assembly of embodiment 2, wherein the aspect ratio of a first rotor stack cavity of the plurality of rotor stack cavities is greater than the aspect ratio of a second rotor stack cavity of the plurality of rotor stack cavities, and wherein a first number of secondary flow channels are in fluid communication with the first rotor stack cavity and a second number of secondary flow channels are in fluid communication with the second rotor stack cavity, the first number of secondary flow channels being greater than the second number of secondary flow channels such that the first rotor stack cavity and the second rotor stack cavity are filled by a material injected through the secondary flow channel at a substantially equal rate.
4. The rotor core mold assembly of embodiment 2, wherein a first rotor stack cavity of the plurality of rotor stack cavities has a length dimension greater than the length dimension of a second rotor stack cavity of the plurality of rotor stack cavities, and wherein the first rotor stack cavity has a width dimension less than the width dimension of the second rotor stack cavity, the length dimension being defined between closed ends of each of the plurality of rotor stack cavities and the width dimension being defined between opposing walls forming each of the plurality of rotor stack cavities, the cavity cross-sectional area being substantially equal between the first rotor stack cavity and the second rotor stack cavity such that the first rotor stack cavity and the second rotor stack cavity are filled by a material injected through the secondary flow channels at a substantially equal rate.
5. The rotor core mold assembly of embodiment 4, wherein the width dimension of one of the plurality of rotor stack cavities is substantially uniform along the length dimension between closed ends of the respective rotor stack cavity.
6. The rotor core mold assembly of embodiment 4, wherein a distance between adjacent rotor stack cavities of the plurality of rotor stack cavities is such that a ratio of the distance between adjacent rotor stack cavities to the width dimension of at least one of the adjacent rotor stack cavities is approximately 0.8 to 1.
7. The rotor core mold assembly of embodiment 4, wherein a distance between adjacent rotor stack cavities of the plurality of rotor stack cavities is such that a ratio of the distance between adjacent rotor stack cavities to the width dimension of at least one of the adjacent rotor stack cavities is approximately 1.2 to 1.
8. The rotor core mold assembly of embodiment 1, wherein the plurality of secondary flow channels extend outwardly from the flow channel.
9. The rotor core mold assembly of embodiment 1, wherein each of the plurality of secondary flow channels includes an outlet interface defined on the bottom surface of the distribution plate in fluid communication with at least one of the plurality of rotor stack cavities.
10. The rotor core mold assembly of embodiment 1, wherein the rotor stack has a plurality of rotor poles, each of the plurality of rotor poles being defined by the plurality of rotor stack cavities, wherein the cavity cross-sectional area of a respective rotor stack cavity is substantially similar for each of the plurality of rotor poles.
11. The rotor core mold assembly of embodiment 1, wherein the aspect ratio of one or more of the plurality of rotor stack cavities is greater than 0.02.
12. A rotor core positionable in a rotor core mold, the rotor core comprising:
   a rotor stack having a top surface and a bottom surface defining a longitudinal length of the rotor stack; and
   at least one rotor pole defined by a plurality of rotor stack cavities extending from the top surface through the rotor stack to the bottom surface, each of the plurality of rotor stack cavities having an aspect ratio defined by a width of a respective rotor stack cavity and the longitudinal length of the rotor stack, wherein the aspect ratio of each of the plurality of rotor stack cavities is balanced such that the plurality of rotor stack cavities are filled by a material at a substantially equal rate.
13. The rotor core of embodiment 12, wherein each of the plurality of rotor stack cavities has a surface geometry defined on the top surface of the rotor stack, the surface geometry being one of a linearly segmented geometry and a curved geometry.
14. The rotor core of embodiment 13, wherein the linearly segmented geometry is defined by a medial portion and a plurality of lateral portions, the plurality of lateral portions being angled relative to the medial portion.
15. The rotor core of embodiment 13, wherein the cavity cross-sectional area of each of the plurality of rotor stack cavities is defined by a width dimension of a respective rotor stack cavity and a length dimension of the linearly segmented geometry of the respective rotor stack cavity.
16. The rotor core of embodiment 15, wherein the rotor stack has a plurality of rotor poles, each of the plurality of rotor poles being defined by the plurality of rotor stack cavities, wherein the cavity cross-sectional area of a respective rotor stack cavity is substantially similar for each of the plurality of rotor poles.
17. The rotor core of embodiment 15, wherein a distance between adjacent rotor stack cavities of the plurality of rotor stack cavities is such that a ratio of the distance between adjacent rotor stack cavities to the width dimension of at least one of the adjacent rotor stack cavities is approximately 0.8 to 1.
18. The rotor core of embodiment 15, wherein a distance between adjacent rotor stack cavities of the plurality of rotor stack cavities is such that a ratio of the distance between adjacent rotor stack cavities to the width dimension of at least one of the adjacent rotor stack cavities is approximately 1.2 to 1.
19. The rotor core of embodiment 15, wherein the width dimension of one of the plurality of rotor stack cavities is substantially uniform along the length dimension between closed ends of the respective rotor stack cavity.
20. The rotor core of embodiment 12, wherein the aspect ratio of one or more of the plurality of rotor stack cavities is greater than 0.02.

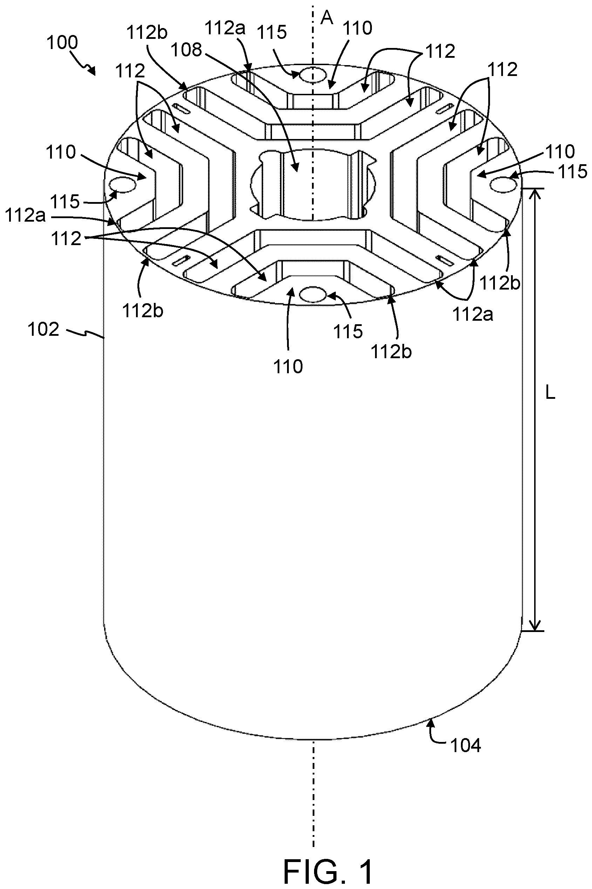

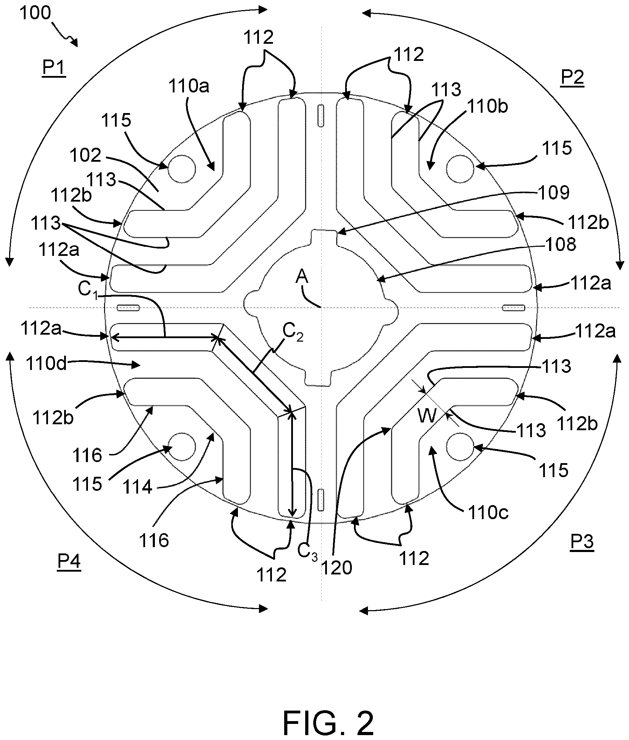

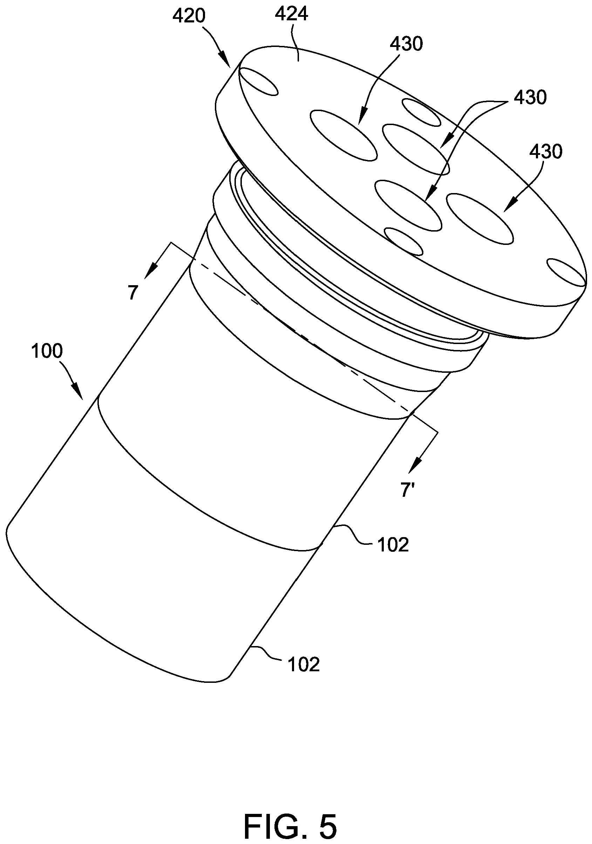

Describing the embodiment of the disclosure in greater detail, FIGS. 1 and 2 illustrate an exemplary rotor core 100. FIG. 1 illustrates a perspective view of the rotor core 100 and FIG. 2 illustrates a top view of the rotor core 100. The rotor core 100 is part of a motor assembly which includes a rotor shaft, a rotor, and a stator (not shown). In some embodiments, the rotor core 100 is a permanent magnet synchronous reluctance machine (PMSynRM) rotor core. In the embodiment shown in FIG. 1, the rotor core 100 comprises a unitary, cylindrical body 102 referred to hereinafter as a rotor stack. In some embodiments, the rotor stack 102 is comprised of two or more cylindrical bodies 102 (as shown in FIG. 5).

As used herein, the term "electric motor" denotes an electrical machine which converts electrical energy into mechanical energy. The electric motor operates through the interaction between the magnetic fields formed in wire windings of a stator and integrated magnets of the rotor to generate force in the form of torque applied on a rotor shaft. An electric generator converts mechanical energy to electrical energy. The components generally comprising a stator, rotor, conductors, and housing may be provided in both the generator and motor. Therefore, because the electric generator and motor are similar in their operability and mechanical aspects, it should be understood that the mechanical aspects of the electric motors described herein also describe an electric generator, and the term electric motor also includes electric generators.

As shown in FIGS. 1 and 2, the rotor stack 102 includes a bottom surface 104 and a top surface 106, defining a longitudinal length L of the rotor stack 102. The rotor stack 102 has a central longitudinal axis A extending along the rotor stack length L defined between the top surface 106 and the bottom surface 104. A centrally located shaft bore 108 extends longitudinally, along axis A of the rotor stack 102. The shaft bore 108 is adapted to receive a rotor shaft (not shown) therethrough. The rotor shaft (not shown) may be secured to the rotor stack 102 by a friction fit, a weld or adhesive, or by the use of a key which can be inserted into one or more keyways 109 located on an inner surface of the shaft bore 108 (shown in FIG. 2). In some embodiments, the rotor stack 102 is secured to the rotor shaft (not shown) by c-clips.

The rotor stack 102 further includes at least one rotor pole. The present embodiment of the disclosure includes four rotor poles 110a, 110b, 110c and 110d. Each of the rotor poles 110a-d includes at least one rotor stack cavity 112, and in some embodiments each of the rotor poles 110a-d further includes a circular rotor stack cavity 115. In the present disclosure each rotor pole 110a, 1 10b, 110c and 110d includes two rotor cavities 112a, 112b. Each of the rotor stack cavities 112a, 112b of the rotor poles 110a, 110b, 110c, 110d extends longitudinally through the rotor stack 102. As shown in FIG. 2 for purposes of illustration, the top surface 106 of the rotor stack 102 is illustratively divided into four portions (P1, P2, P3, P4) that comprises approximately ninety degrees of the circular rotor stack 102. Each rotor pole 1 10a, 110b, 110c and 110d is located in a respective portion P1, P2, P3 and P4. The four-pole rotor core 100 described herein is an exemplary configuration and the number of rotor poles 110 is not intended to be limiting. The rotor core 100 may have any number of rotor poles 110, and the top surface 106 of the rotor stack 102 may be illustratively divided such that each of the rotor poles 110 (and the plurality of rotor stack cavities 112) are symmetrically oriented about the central longitudinal axis A. Similarly, the number of rotor stack cavities 112 shown in FIG. 2 is an exemplary configuration and the number of rotor stack cavities 112 (per rotor pole 110) is not intended to be limiting.

Each of the plurality of rotor stack cavities 112 includes a cavity wall 113 which extends from the bottom surface 104 to the top surface 106. A width W of the plurality of rotor stack cavities 112 is defined by the distance between opposing cavity walls 113. In some embodiments, the width W is substantially uniform for each rotor stack cavity 112 between the closed ends of each of the rotor stack cavities 112 to facilitate reducing demagnetization of thinner portions of the rotor stack cavity 112. In some embodiments, the width W varies for each rotor stack cavity 112.

In the embodiment shown in FIG. 2, each of the plurality of rotor stack cavities 112 has a linearly segmented geometry. The linearly segmented geometry is defined by a medial portion 114 and a plurality of lateral portions 116 with each of the lateral portions 116 extending at an angle from, and relative to the lateral ends of, the associated medial portion 114. In some embodiments, the lateral portions 116 are oriented at an acute angle relative to the medial portion 114. For each rotor pole 110a-d, in each portion P1, P2, P3 and P4, the medial portions 114 of the rotor stack cavities 112 of the respective portion P1, P2, P3 or P4 are parallel to one another, and the lateral portions 116 are at the same acute angle relative to the medial portions 114 such that the lateral portions 116 of the adjacent rotor stack cavities 112 of the respective portion P1, P2, P3 or P4 are parallel to one another.

For each rotor stack cavity 112 of each rotor pole 110a, 110b, 110c and 110d, the combination of the medial portion 114 and the lateral portions 116 forms a substantially U-shape with the lateral portions 116 extending radially outwardly from each associated medial portion 114. The closed ends of the lateral portions 116 are located proximate the outer periphery of the rotor pole 110a, 110b, 110c or 110d, with the medial portions 114 located inwardly from the closed lateral member ends. The transitions 120 joining the medial portion 114 and lateral portions 116 may have a width greater than the uniform with W. In some embodiments, the transitions 120 may be rounded such that the widths of the transitions are substantially equal to the magnitude of the width W. In the exemplary embodiment, all connection points of each of the rotor stack cavities 112 are rounded, including, but not limited to, transitions 120, to facilitate reducing excessive magnetic saturation at sharp bends.

Each of the rotor stack cavities 112 has an associated cross-sectional area. The cross-sectional area of the rotor stack cavities 112 is generally defined as the total of the lengths of the cavity cross sections C1, C2, C3 as shown in FIG. 2, for a length C of the rotor stack cavity 112, of the combined medial portions 114 and lateral portions 116 multiplied by the width W. Additionally, each of the rotor stack cavities 112 has an associated cavity volume. The cavity volume of the rotor stack cavities 112 is generally defined as the length C multiplied by the width W multiplied by a length L (shown in FIG. 1) of the rotor stack 102.

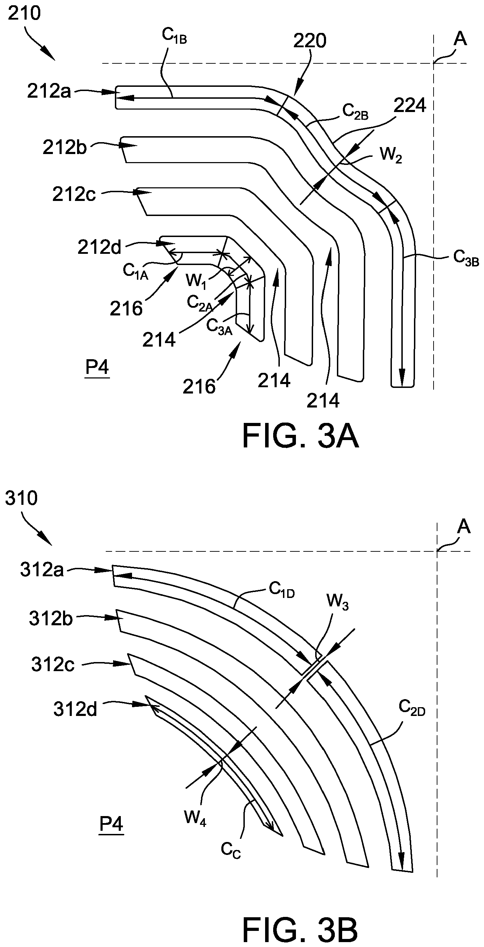

In the exemplary embodiment, the cross-sectional area of the rotor stack cavities 112a, 112b is substantially similar to facilitate substantially equalized fill rates for each rotor stack cavity 112 of a rotor pole 110. For example, the cross-sectional area of the rotor stack cavity 112a radially proximate the central longitudinal axis A may be substantially the same as the cross-sectional area of the rotor stack cavity 112b radially distal to the central longitudinal axis A. As the total length C of rotor stack cavities 112a and 112b may be different, as illustrated in FIG. 2, the width W may vary between rotor stack cavities 112a and 112b to equalize the cross-sectional area. For example, to equalize the cross-sectional area between rotor stack cavities 112a and 112b, outer rotor stack cavity 112b may have a width W that is greater than the width, W of the inner rotor stack cavity 112a. The increased width W of the outer cavity 112b will enable the outer rotor stack cavity 112b to be filled at substantially the same rate as the inner stack cavity 112a that has a longer length C than cavity 112b and a smaller width W than outer rotor stack cavity 112b. A distance D between the rotor stack cavities 112 (shown in FIGS. 3A and 3B) may be substantially similar to the width W of the rotor stack cavities. In some embodiments, the ratio of the distance between the rotor stack cavities 112 to the width W of the rotor stack cavities may be in the range of about 0.8 to 1. In other embodiments, the ratio of the distance between the rotor stack cavities 112 to the width W of the rotor stack cavities may be in the range of about 1.2 to about 1.In the exemplary embodiment, the cavity volume of the rotor stack cavities 112 is aligned across the portions P1, P2, P3 and P4, for each of the rotor poles 110, of the rotor core 100. For example, the cavity volume of the rotor stack cavity 112a, proximate the central longitudinal axis A of the rotor stack 102, for each of the rotor poles 110 may have substantially the same cavity volume. Shared cavity volumes across the rotor poles 110a-d may facilitate substantially equalized fill rates for a rotor stack cavity 112 for each rotor pole 110.

FIG. 3A illustrates a plan view of a rotor pole 210 and associated rotor cavity geometries in accordance with an alternate embodiment of the present disclosure. Although one rotor pole 210 is shown in FIG. 3A, the rotor stack 102 may include four similar rotor poles, oriented in portions P1, P2, P3, and P4 similar to the orientation previously described with regard to rotor poles 110a-110d. As shown in FIG. 3A, the exemplary rotor pole 210 is oriented in portion P4. The rotor pole 210 includes a plurality of rotor stack cavities 212a, 212b, 212c, and 212d. Rotor stack cavity 212a is radially proximate central longitudinal axis A, and rotor stack cavity 212d is radially distal the central longitudinal axis A. Rotor stack cavities 212b and 212c are located between rotor stack cavities 212a and 212d and are adjacent the respective rotor stack cavities. Each of the rotor stack cavities includes a generally W-shaped configuration. The cross-sectional area of each rotor stack cavity 212 decreases in magnitude as the cavities extend radially outwardly from central axis A. Rotor stack cavity 212a comprises the largest relative magnitude cross-sectional area of the rotor stack cavities 212a-212d and rotor stack cavity 212d comprises the smallest magnitude relative cross section of the rotor stack cavities 212a-212d. Each of the rotor stack cavities 212a-d includes a medial portion 214 and lateral portions 216 extending at an angle from lateral ends of the medial portion 214 similar to the medial portion 114 and the lateral portions 116 of rotor cavities 112a, 112b previously described.

The plurality of rotor stack cavities 212a-d include rounded transitions 220 between the medial portion 214 and respective lateral portions 216. The rotor stack cavities 212a-212d are closed at the ends of the lateral portions 216. The widths of the medial portion 214 and respective lateral portions 216 are substantially uniform. However the magnitudes of the widths of the discrete rotor stack cavities 212a-d vary radially relative to central axis A. Extending radially outwardly from central axis A, the rotor stack cavity 212a proximate axis A comprises the narrowest relative width W2 of the rotor stack cavities, and rotor stack cavity 212d the most radially distal from axis A comprises the widest relative width W1 of the rotor stack cavities 212a-d. In some embodiments, the medial portions 214 are curved and non-linear. By way of example, a medial portion 224 of the rotor stack cavities 212 radially proximate the central longitudinal axis A has a concave geometry. In some embodiments, the medial portions 214 have a convex geometry. The rounded transitions 220 and the curved medial portions 214 improve the flow of molten composite material through the rotor stack cavities 212.

Varying the width of the rotor stack cavities 212a-d facilitates balancing the cross-sectional areas and the aspect ratios (the cavity width W divided by the length L) of the rotor stack cavities 212. As explained in further detail below, balanced aspect ratios in combination with injection gate configurations of the distribution plate facilitates a balanced fill rate across the rotor stack cavities 212 such that when material is injected into the rotor stack cavities 212a-d, the material fills the respective volumes (cross-sectional area * length L) of the rotor stack cavities 212a-d at substantially the same rate. In the exemplary embodiment, the aspect ratio (the cavity width W / the length L) of each of the rotor stack cavities 212 is larger than 0.02 to facilitate a smooth filling. Similar to rotor stack cavities 112a and 112b that are separated by a substantially constant distance, each of the cavities 212a-212d is separated from adjacent cavity/cavities by a substantially constant distance. The width W of the respective rotor stack cavities 212a, 212b, 212c and 212d to the distance separating adjacent rotors may be in the range of about 0.8 to 1. In other embodiments, the ratio of the distance between the rotor stack cavities 212a, 212b, 212c, 212d to the respective width W of the rotor stack cavities may be in the range of about 1.2 to about 1.

For example, as shown in FIG. 3A, the aspect ratio of the rotor stack cavities 212a and 212d may be balanced by increasing W₁ as compared to W₂, for substantially similar cross-sectional areas of the rotor stack cavities 212a and 212d with the length of the rotor stack cavity 212a (e.g., the sum of C_{1A}, C_{2A}, and C_{3A}) being less than the length of the rotor stack cavity 212d (e.g., the sum of C_{1B}, C_{2B}, and C_{3B}).

FIG. 3B illustrates a plan view of a rotor pole 310 and associated cavity geometries in accordance with an alternate embodiment of the present disclosure. FIG. 3B illustrates a plan view of a rotor pole 310 and associated rotor cavity geometries of a plurality of rotor stack cavities 312a, 312b, 312c and 312d. Although one rotor pole 310 is shown in FIG. 3B, the rotor stack 102 may include four similar rotor poles, oriented in portions P1, P2, P3, and P4 similar to the orientation previously described with regard to rotor poles 110a-110d, and rotor poles 210a-210d. As shown in FIG. 3B, the exemplary rotor pole 310 is oriented in portion P4. Rotor stack cavity 312a is radially proximate central longitudinal axis A, and rotor stack cavity 312d is radially distal the central axis A. Rotor stack cavities 312b and 312c are located between rotor stack cavities 312a and 312d and are adjacent the respective rotor stack cavities. Each of the rotor stack cavities 312a-312d includes a generally C-shaped configuration. The cross-sectional area of each rotor stack cavity 312a-312d decreases in magnitude as the cavities extend radially outwardly from central axis A. Rotor stack cavity 312a comprises the largest relative magnitude cross-sectional area of the rotor stack cavities 312a-312d and rotor stack cavity 312d comprises the smallest magnitude relative cross section of rotor stack cavities 312a-312d. Each of the plurality of rotor stack cavities 312a-312d includes closed cavity ends.

For each rotor stack cavity 312a-d, the width of each discrete stack rotor cavity is substantially uniform. However the relative magnitudes of the widths of the discrete rotor stack cavities 312a-d vary radially. For example, extending radially outwardly from central axis A, the rotor stack cavity 312a proximate axis A comprises the widest relative width W3 of the rotor stack cavities, and rotor stack cavity 312d the most radially distal relative to axis A comprises the narrowest relative width W4 of the rotor stack cavities 312a-d. Each of the plurality of rotor stack cavities 312a-312d are non-linear and curved. In the illustrated embodiment, the plurality of rotor stack cavities 312 have a convex geometry relative to axis A. In some embodiments, the plurality of rotor stack cavities 312 have a concave geometry relative to axis A.

The rotor stack cavity 312a radially proximate the central longitudinal axis A has a width W₃ that has a magnitude that is greater than a width W₄ of a rotor stack cavity 312d radially distal the central axis A and this results in unbalanced aspect ratios (width W * length L) for each rotor stack cavity 312a-312d. In such an embodiment, injecting material into the rotor stack cavities 312a and 312d at the same flow rate (volume and/or pressure) results in an unbalanced fill rate. In comparison, when the stack length is the same, rotor stack cavity 310 has a smaller aspect ratio than rotor stack cavity 210, under similar flow channel, it is more difficult to fill the 310 cavities, and more difficult to achieve a balanced fill pattern. Therefore, it is preferred to adopt 210 cavity design.

Varying the width of the rotor stack cavities 312a-d facilitates balancing the cross-sectional areas and the aspect ratios (width W / length L) of the rotor stack cavities 312. As explained in further detail below, balanced aspect ratios in combination with injection gate configurations of the distribution plate facilitates a balanced fill rate across the rotor stack cavities 312 such that when material is injected into the rotor stack cavities 312a-d, the material fills the respective volumes (cross-sectional area * length L) of the rotor stack cavities 312a-d at substantially the same rate. In the exemplary embodiment, the aspect ratio of each of the rotor stack cavities 312 (the cavity width W divided by the stack length L) is larger than 0.02 to facilitate a smooth filling. Similar to rotor stack cavities 112a and 112b that are separated by a substantially constant distance, each of the cavities 312a-312d is separated from adjacent cavity/cavities by a substantially constant distance. The width W of the respective rotor stack cavities 312a, 312b, 312c and 312d to the distance separating adjacent rotors may be in the range of about 0.8 to 1. In other embodiments, the ratio of the distance between the rotor stack cavities 312a, 312b, 312c, 312d to the respective width W of the rotor stack cavities may be in the range of about 1.2 to about 1.For example, as shown in FIG. 3B, the aspect ratio of the rotor stack cavities 312a and 312d may be balanced by increasing W₄ as compared to W₃, for substantially similar cross-sectional areas of the rotor stack cavities 312a and 312d with the length of the rotor stack cavity 312a (e.g., the sum of C_{1D} and C_{2D}) being less than the length of the rotor stack cavity 312d (e.g., C_{C}).

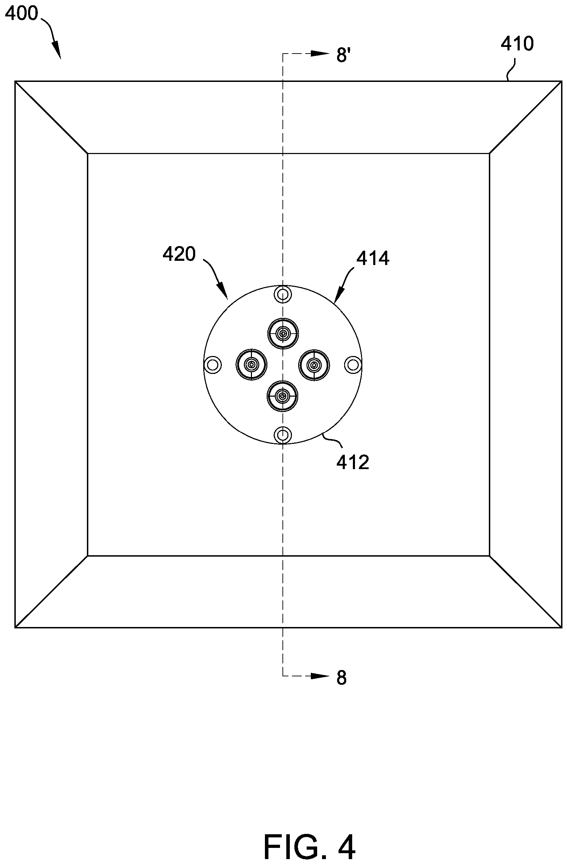

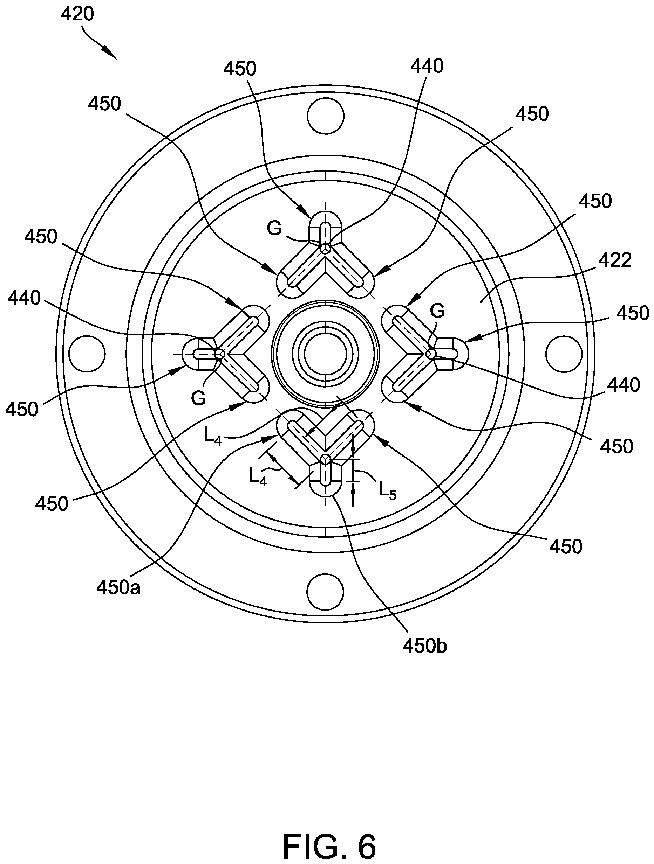

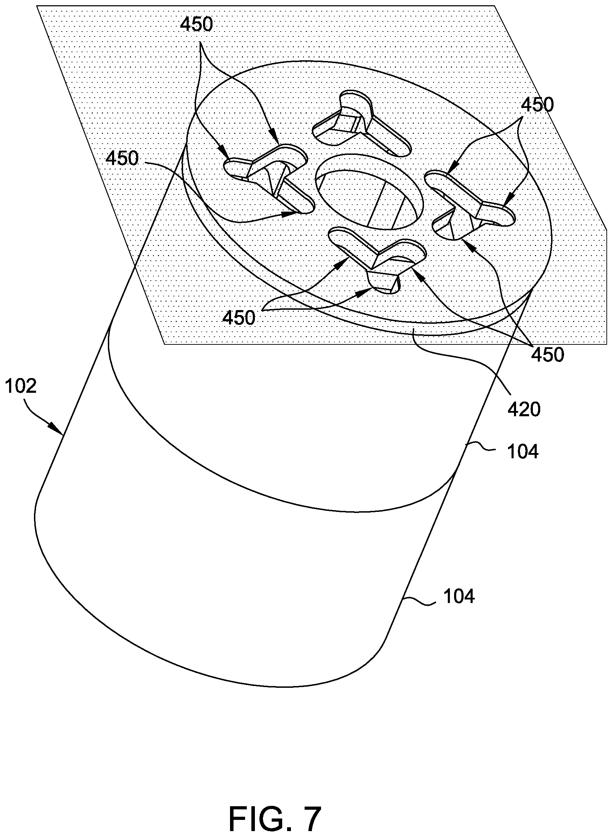

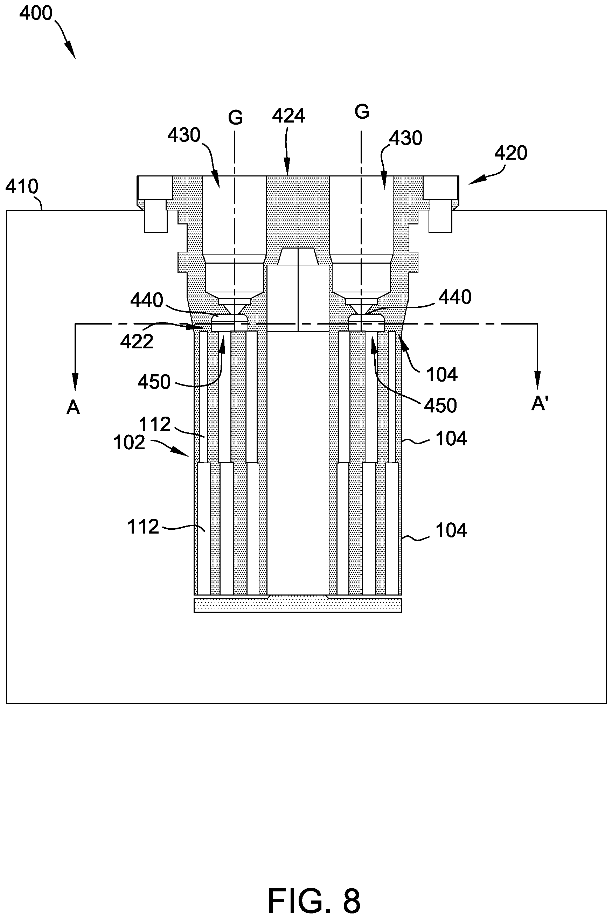

FIG. 4 illustrates a top view of a rotor core mold assembly 400. The assembly 400 includes a mold body 410 having an opening 412 formed on a top surface 414 of the mold body 410. The opening 412 defines a cavity into which one or more rotor stacks are inserted (as shown in FIG. 8). A distribution plate 420 is positioned over the rotor stacks, to thereby form a fluid seal with the rotor stacks and the mold body 410. FIG. 5 illustrates a perspective view of the distribution plate 420 positioned on the top surface 106 of the rotor stack 102. FIG. 6 illustrates a bottom view of the distribution plate 420 of FIG. 4. FIG. 7 illustrates a cross-sectional perspective view of the distribution plate 420 along line 7-7' as shown in FIG. 5. FIG. 8 illustrates a cross-sectional view of the rotor core mold assembly 400 along line 8-8' as shown in FIG. 4.

In the embodiments shown in FIGS. 4 through 8, two rotor stacks 102 form the rotor core 100. As best shown in FIG. 8, the rotor stacks 102 are oriented such that the plurality of rotor stack cavities 112, 212, 312 of the rotor stacks 102 are aligned. As best shown in FIGS. 5 and 8, the distribution plate 420 is positioned over the rotor stacks 102 such that a bottom surface 422 of the distribution plate 420 is positioned against the top surface 106 of the upper rotor stack 102 to thereby form a fluid seal.

With reference to FIGS. 5 through 8, the distribution plate 420 includes at least one flow channel 430 on a top surface 424 of the distribution plate 420. The flow channel 430 extends through the distribution plate 420 and fluidly connects to an injection gate 440 positioned on the bottom surface 422 of the distribution plate 420. Each injection gate 440 is in fluid communication with the rotor stack cavities 112, 212, 312 of one rotor pole 110. For purposes of describing an embodiment of the invention, the rotor stack cavities 112 will be specifically referred to as the description proceeds. However, it should be understood that rotor stack cavities 212, 312 function in a manner similar to cavities 112. In some embodiments, the flow channel 430 is in fluid communication with one injection gate 440. In some embodiments, multiple injection gates 440 are in fluid communication with one flow channel 430. Each injection gate 440 comprises a plurality of flow channels 450, and the plurality of flow channels 450 are in fluid communication with one or more rotor stack cavities 112 of one rotor pole 110 (as best shown in FIG. 7). As best shown in FIG. 8, each flow channel 430 and corresponding injection gate 440 are concentric about an injection gate axis G. As best shown in FIG. 6, the plurality of flow channels 450 extend outwardly from the injection gate 440 and the injection gate axis G, and in some embodiments, the flow channels 450 are positioned outwardly to varying extents relative to the corresponding injection gate 440. By way of example, as shown in FIG. 6, a first flow channel 450a has a length L₄ which is greater than a length L₅ of a second flow channel 450b. In the illustrated embodiment, shown in FIG. 6, the injection gates 440 each have one flow channel with length L₅ and two flow channels with length L₄.

The flow channels 450 are separated from each adjacent injection gate 440 channel by an angle. In some embodiments the angle separating each pair of adjacent flow channels 450 are equal. In some embodiments the angle separating each pair of adjacent channels 450 are unequal. As best shown in FIGS 6 and 7, each of the plurality of flow channels 450 are open at the bottom surface 422 of the distribution plate 420. The open flow channels 450 define a direct outlet interface which facilitate the flow of molten composite material from the injection gates 440, through the plurality of flow channels 450 directly to the associated rotor stack cavities 112. The orientation of the flow channels 450, the length of the flow channels 450 and the angle of the flow channels 450 relative to the corresponding injection gate 440 are sized and configured to deliver molten composite material to one or more rotor stack cavities 112.

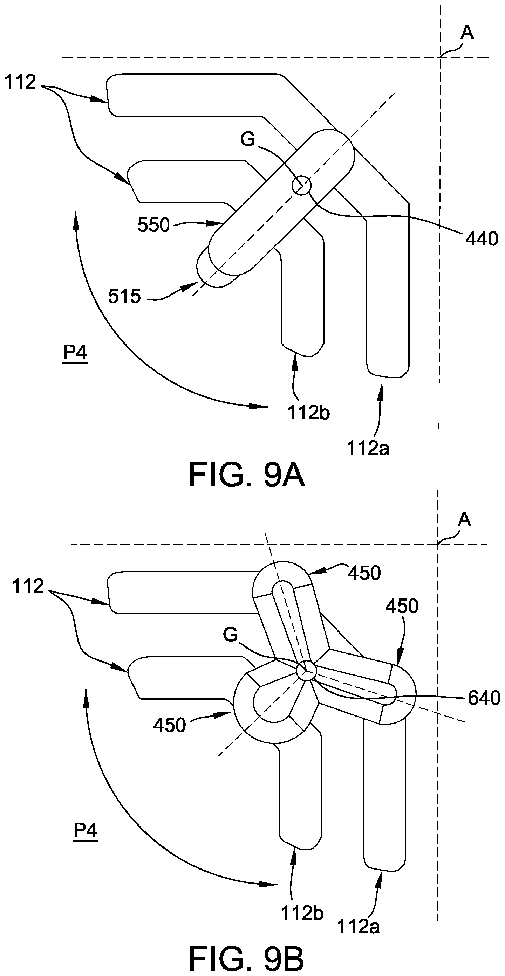

FIGS. 9A and 9B illustrate plan views of flow channel configurations of the distribution plate 420 in accordance with embodiments of the present disclosure. The injection gates 540, 640 and the flow channels 550, 650 of FIGS. 9A and 9B respectively are oriented in exemplary portion P4 of FIG. 2, and the injection gates 540, 640 are in fluid communication with and are positioned over rotor stack cavities 112a, 112b of FIG. 2. The flow channels may be aligned in a linear orientation, such as shown for flow channel 550, or provided in a spoked pattern, such as shown for flow channel 650. Note that this configuration, although shown within portion P4 may also be associated with rotor stack cavity portion P1, P2, and/or P3 as previously described.

As shown in FIG. 9A, as previously described, the at least one rotor pole is defined by a first rotor stack cavity 112a, a second rotor stack cavity 112b, and circular rotor stack cavity 515, with the first rotor stack cavity 112a oriented radially proximal to the central longitudinal axis A relative to the second rotor stack cavity 112b, and circular rotor stack cavity 515 oriented radially distal to rotor stack cavity 112b. Having uniform widths, the first rotor stack cavity 112a has a cross-sectional area and aspect ratios that have a greater magnitude than the second rotor stack cavity 112b and the circular rotor stack cavity 515. The injection gate 540 of distribution plate 420 has a channel gate configuration where a single linear flow channel 550 extends between the rotor stack cavities 112a, 112b, 515. Because the single linear flow channel 550 has a uniform cross-sectional area, the rotor stack cavities 112a, 112b, 515 will fill at different rates, with the circular rotor stack cavity 515 (having the smallest cross-sectional area and aspect ratio) filling before the first rotor stack cavity 112a and second rotor stack cavity 112b. This unbalanced fill and packing leads to excessive stresses on the rotor stack, resulting in deformation and cracking of the rotor stack.

As shown in FIG. 9B, as previously described, the at least one rotor pole is defined by the first rotor stack cavity 112a and the second rotor stack cavity 112b, with the first rotor stack cavity 112a oriented radially proximal to the central longitudinal axis A relative to the second rotor stack cavity 112b. Having uniform widths, the first rotor stack cavity 112a has a cross-sectional area and aspect ratio greater than the second rotor stack cavity 112b. Because the first rotor stack cavity 112a has a cross-sectional area and aspect ratio greater than the second rotor stack cavity 112b, the first rotor stack cavity 112a requires a greater flow of molten composite material such that both of the rotor stack cavities 112a, 112b fill in substantially the same time. To achieve a substantially balanced injection filling pattern, the injection gate 640 has a tri-arm gate configuration where two flow channels 650 are in fluid communication with the first rotor stack cavity 112a and one flow channel 650 is in fluid communication with the second rotor stack cavity 112b.

The magnitude of fluid flowing from the flow channels 650 is a function of system pressure, the cross-sectional areas of the flow channels 650 and the number of flow channels 650 in fluid communication with the rotor stack cavities 612. Because two flow channels 650 are in fluid communication with the first rotor stack cavity 112a, the cross-sectional areas of the two flow channels 650 are aggregated. The aggregated cross-sectional area is proportional to the aspect ratio of the first rotor stack cavity 112a. Similarly, the cross-sectional area of the one flow channel 650 in fluid communication with the second rotor stack cavity 112b is proportional to the aspect ratio of the second rotor stack cavity 112b. Depending on the aspect ratios of the rotor stack cavities 112 and the number of flow channels 650 in fluid communication with the rotor stack cavities 112, the diameter of the flow channels 650 may be in the range of 0.5mm (0.012 inches) to 10mm (0.394 inches). In some embodiments, the diameter of one or more flow channels may be lesser or greater relative to another flow channel such that the flow of molten composite material is greater in the channel having the greater diameter . In some embodiments, the diameter of the flow channels are substantially equal.

Although specific features of various embodiments may be shown in some drawings and not in others, this is for convenience only. Moreover, references to "one embodiment" in the above description are not intended to be interpreted as excluding the existence of additional embodiments that also incorporate the recited features. In accordance with the principles of the disclosure, any feature of a drawing may be referenced and/or claimed in combination with any feature of any other drawing.

This written description uses examples, including the best mode, to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A rotor core mold assembly comprising:
a rotor stack having a top surface and at least one rotor pole, the at least one rotor pole defined by a plurality of rotor stack cavities extending from the top surface through the rotor stack, each of the plurality of rotor stack cavities having an aspect ratio defined by a width of a respective rotor stack cavity and a longitudinal length of the rotor stack; and,
a distribution plate having a top surface and a bottom surface, the bottom surface removably locatable on the top surface of the rotor stack to thereby form a fluid seal, the distribution plate further comprising:
a flow channel positioned on the top surface of the distribution plate and extending through the distribution plate;
an injection gate positioned proximate the bottom surface of the distribution plate in fluid communication with the flow channel; and,
a plurality of secondary flow channels coupled between the injection gate and the bottom surface of the distribution plate in fluid communication with the injection gate, each of the plurality of secondary flow channels being in fluid communication with at least one of the plurality of rotor stack cavities, each of the plurality of secondary flow channels having a channel cross-sectional area.

2. The rotor core mold assembly of claim 1, wherein the channel cross-sectional area of each of the plurality of secondary flow channels is proportional to the aspect ratio of the respective rotor stack cavity with which the respective secondary flow channel is in fluid communication.

3. The rotor core mold assembly of claim 2, wherein the aspect ratio of a first rotor stack cavity of the plurality of rotor stack cavities is greater than the aspect ratio of a second rotor stack cavity of the plurality of rotor stack cavities, and wherein a first number of secondary flow channels are in fluid communication with the first rotor stack cavity and a second number of secondary flow channels are in fluid communication with the second rotor stack cavity, the first number of secondary flow channels being greater than the second number of secondary flow channels such that the first rotor stack cavity and the second rotor stack cavity are filled by a material injected through the secondary flow channel at a substantially equal rate.

4. The rotor core mold assembly of claim 2 or 3, wherein a first rotor stack cavity of the plurality of rotor stack cavities has a length dimension greater than the length dimension of a second rotor stack cavity of the plurality of rotor stack cavities, and wherein the first rotor stack cavity has a width dimension less than the width dimension of the second rotor stack cavity, the length dimension being defined between closed ends of each of the plurality of rotor stack cavities and the width dimension being defined between opposing walls forming each of the plurality of rotor stack cavities, the cavity cross-sectional area being substantially equal between the first rotor stack cavity and the second rotor stack cavity such that the first rotor stack cavity and the second rotor stack cavity are filled by a material injected through the secondary flow channels at a substantially equal rate.

5. The rotor core mold assembly of claim 4, wherein the width dimension of one of the plurality of rotor stack cavities is substantially uniform along the length dimension between closed ends of the respective rotor stack cavity.

6. The rotor core mold assembly of claim 4 or 5, wherein a distance between adjacent rotor stack cavities of the plurality of rotor stack cavities is such that a ratio of the distance between adjacent rotor stack cavities to the width dimension of at least one of the adjacent rotor stack cavities is approximately 0.8 to 1.

7. The rotor core mold assembly of claim 4 or 5, wherein a distance between adjacent rotor stack cavities of the plurality of rotor stack cavities is such that a ratio of the distance between adjacent rotor stack cavities to the width dimension of at least one of the adjacent rotor stack cavities is approximately 1.2 to 1.

8. The rotor core mold assembly of any one of claims 1 to 7, wherein the plurality of secondary flow channels extend outwardly from the flow channel.

9. The rotor core mold assembly of any one of claims 1 to 8, wherein each of the plurality of secondary flow channels includes an outlet interface defined on the bottom surface of the distribution plate in fluid communication with at least one of the plurality of rotor stack cavities.

10. The rotor core mold assembly of any one of claims 1 to 9, wherein the rotor stack has a plurality of rotor poles, each of the plurality of rotor poles being defined by the plurality of rotor stack cavities, wherein the cavity cross-sectional area of a respective rotor stack cavity is substantially similar for each of the plurality of rotor poles.

11. The rotor core mold assembly of any one of claims 1 to 10, wherein the aspect ratio of one or more of the plurality of rotor stack cavities is greater than 0.02.

12. A rotor core positionable in the rotor core mold assembly according to any one of claims 1 to 11.

13. The rotor core of claim 12, wherein each of the plurality of rotor stack cavities has a surface geometry defined on the top surface of the rotor stack, the surface geometry being one of a linearly segmented geometry and a curved geometry.

14. The rotor core of claim 13, wherein the linearly segmented geometry is defined by a medial portion and a plurality of lateral portions, the plurality of lateral portions being angled relative to the medial portion.

15. The rotor core of claim 13 or 14, wherein the cavity cross-sectional area of each of the plurality of rotor stack cavities is defined by a width dimension of a respective rotor stack cavity and a length dimension of the linearly segmented geometry of the respective rotor stack cavity.
